(19) Europäisches Patentamt / European Patent Office / Office européen des brevets

(11) **EP 4 423 930 B1**

(12) **FASCICULE DE BREVET EUROPEEN**

(45) Date de publication et mention de la délivrance du brevet:
**15.10.2025  Bulletin 2025/42**

(21) Numéro de dépôt: **22801854.5**

(22) Date de dépôt: **17.10.2022**

(51) Classification Internationale des Brevets (IPC):
***H04B 10/112*** (2013.01)     ***H04B 10/118*** (2013.01)

(52) Classification Coopérative des Brevets (CPC):
**H04B 10/118; H04B 10/112**

(86) Numéro de dépôt international:
**PCT/FR2022/051958**

(87) Numéro de publication internationale:
**WO 2023/073301 (04.05.2023 Gazette 2023/18)**

(54) **DISPOSITIF DE TRAITEMENT D'AU MOINS DEUX FAISCEAUX LUMINEUX MONOMODES**

VORRICHTUNG ZUR BEHANDLUNG VON MINDESTENS ZWEI OPTISCHEN EINMODENSTRAHLEN

DEVICE FOR TREATMENT OF AT LEAST TWO SINGLE-MODE OPTICAL BEAMS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:  **28.10.2021  FR 2111490**

(43) Date de publication de la demande:
**04.09.2024  Bulletin 2024/36**

(73) Titulaire: **Cailabs**
**35000 Rennes (FR)**

(72) Inventeurs:
• **BILLAUD, Antonin**
  **35000 RENNES (FR)**
• **PINEL, Olivier**
  **35000 RENNES (FR)**
• **LABROILLE, Guillaume**
  **35000 RENNES (FR)**

(74) Mandataire: **IP Trust**
**2, rue de Clichy**
**75009 Paris (FR)**

(56) Documents cités:
**US-A1- 2009 220 246**

**Description**

**DOMAINE DE L'INVENTION**

La présente invention porte sur un dispositif de traitement d'au moins deux faisceaux lumineux monomodes et cohérents entre eux, par exemple en vue de leur recombinaison. Ce dispositif peut trouver de nombreuses applications, et notamment pour la compensation de la distorsion du front d'onde d'un rayonnement lumineux. Cette distorsion peut trouver son origine dans les perturbations atmosphériques lors d'une communication optique en espace libre. Plus généralement cette distorsion peut être provoquée par la propagation du rayonnement lumineux dans son milieu. L'invention peut trouver une application dans le domaine des télécommunications ou dans le façonnage de pièces par laser.

**ARRIERE PLAN TECHNOLOGIQUE DE L'INVENTION**

Dans le domaine de l'optique, on cherche parfois à combiner une pluralité de faisceaux lumineux monomodes et cohérents entre eux pour former un unique faisceau présentant par exemple une densité d'énergie accrue, une forme ou un pointé choisi. Cette combinaison peut être réalisée par de multiples moyens, par exemple à l'aide d'un réseau diffractif comme enseigné dans le document WO2007100752, à l'aide d'un dispositif photonique comme proposé par le document US20090220246, ou à l'aide d'un dispositif de conversion lumineux multiplan (comme proposé par le produit « TILBA » de la société Cailabs ou dans le document WO2020161126). Dans tous les cas, la qualité optique du faisceau combiné est très dépendante de l'accord en phase et de l'égalité d'amplitude des faisceaux lumineux incidents.

Ces faisceaux présentent toutefois des propriétés qui ne sont pas toujours parfaitement maitrisées ou directement maitrisables. Par exemple, ces faisceaux peuvent résulter de la décomposition modale d'un rayonnement lumineux incident après propagation de ce rayonnement dans un milieu (atmosphère, fibre...). Cette propagation peut provoquer une distorsion significative du rayonnement et les faisceaux qui le décomposent modalement présentent alors des variations de phase et d'amplitude entre eux, également variables dans le temps.

Lorsque les faisceaux à recombiner ne sont pas parfaitement maitrisés en phase ou en amplitude, la transformation réalisée par les dispositifs connus de combinaison cohérente n'est pas parfaitement contrôlée, ce qui peut conduire à détériorer la qualité ou la puissance du faisceau combiné. Une partie de l'énergie présente dans les faisceaux incidents est en effet dans ce cas absorbée, diffusée ou diffractée par le dispositif de combinaison et le faisceau combiné n'est alors pas concentré spatialement. Il peut ainsi présenter un rayonnement de faible amplitude combiné à un halo diffus.

D'une manière générale, il serait utile de pouvoir disposer d'un dispositif permettant de régulariser les phases relatives et les amplitudes d'une pluralité de faisceaux lumineux dont on ne maitrise pas parfaitement les caractéristiques, afin de rendre robustes les manipulations ultérieures qui pourraient être opérées sur ces faisceaux.

**OBJET DE L'INVENTION**

Un but de l'invention est de proposer un tel dispositif de traitement d'au moins deux faisceaux lumineux monomodes. Un autre but de l'invention est de proposer un système optique, tirant profit de ce dispositif, pour notamment recombiner les au moins deux faisceaux lumineux monomodes dans un faisceau monomode recombiné.

**BREVE DESCRIPTION DE L'INVENTION**

En vue de la réalisation de ce but, l'objet de l'invention propose un dispositif de traitement d'au moins deux faisceaux lumineux monomodes et cohérents entre eux, dits « faisceaux incidents », les faisceaux incidents présentant des phases et des amplitudes susceptibles de varier, le dispositif de traitement comprenant au moins, successivement reliés entre eux par des espaces libres ou par des guides d'onde selon un sens principal de propagation : :

- un premier circuit actuateur de phase pour ajuster les phases relatives des faisceaux incidents ;
- un dispositif de conversion multiplan pour recevoir, sur un premier port optique, les faisceaux lumineux issus du premier circuit actuateur de phase et configuré pour répartir l'énergie de ces faisceaux vers au moins deux faisceaux lumineux monomodes, dits « faisceaux convertis », produits au niveau d'un deuxième port optique;
- un deuxième circuit actuateur de phase disposé en aval du dispositif de conversion multiplan pour ajuster les phases relatives des faisceaux convertis (I').

Selon d'autres caractéristiques avantageuses et non limitatives de l'invention, prises seules ou selon toute combinaison techniquement réalisable :

- les faisceaux convertis en sortie du deuxième actuateur de phase présentent des amplitudes relatives et des phases relatives respectivement conformes à des amplitudes relatives de consigne et à des phases relatives de consigne ;

- le dispositif de conversion multiplan comprend une pluralité de zones microstructurées disposées sur au moins un élément optique pour intercepter et modifier spatialement les phases respectives des faisceaux incidents au cours d'une pluralité de réflexions ou de transmissions séparées par une propagation libre ;

- le premier dispositif actuateur de phase et le deuxième dispositif actuateur de phase comprennent une pluralité de déphaseurs optiques associés aux faisceaux incidents et le dispositif de traitement comprend au moins un dispositif de commande pour élaborer des signaux de commande des déphaseurs optique ;

Selon un autre aspect, l'objet de l'invention propose un système optique comprenant un dispositif de traitement tel que présenté précédemment et un démultiplexeur spatial, disposé en amont du premier dispositif actuateur de phase, le démultiplexeur spatial recevant un rayonnement lumineux multimode incident et produisant les faisceaux incidents.

Selon d'autres caractéristiques avantageuses et non limitatives de cet aspect de l'invention, prises seules ou selon toute combinaison techniquement réalisable :

- le démultiplexeur spatial est mis en œuvre par un dispositif de conversion multiplan ;

- les faisceaux convertis sont agencés dans une configuration d'ouverture en mosaïque, la juxtaposition des faisceaux convertis produisant un faisceau lumineux recombiné monomode ;

- Le système comprend un dispositif de multiplexage spatial disposé en aval du deuxième dispositif actuateur de phase, le dispositif de multiplexage spatial recevant les faisceaux convertis pour les recombiner dans un faisceau lumineux recombiné monomode ;

- Le dispositif de multiplexage spatial est mis en œuvre par un dispositif de conversion multiplan ;

- Le système optique comprend une pièce optique réfléchissante disposée directement en aval du deuxième circuit actuateur de phase pour rétro propager les faisceaux convertis à travers le deuxième circuit actuateur de phase et le dispositif de conversion multiplan et fournir le faisceau lumineux recombiné monomode au niveau du premier port optique du dispositif de conversion multiplan ;

- Le système optique comprend un dispositif d'extraction du faisceau lumineux recombiné monomode, le dispositif d'extraction étant disposé entre le premier circuit actuateur de phase et le dispositif de conversion multiplan ;

- le faisceau lumineux recombiné monomode est formé uniquement au niveau d'un mode réservé du premier port optique du dispositif de conversion multiplan ;

- le dispositif de traitement est couplé à une fibre optique monomode dans laquelle le faisceau lumineux recombiné monomode est injecté ;

- Le système optique comprend un récepteur optique pour recevoir le faisceau lumineux recombiné monomode ;

- le récepteur optique comprend un amplificateur optique du faisceau lumineux recombiné monomode, un démultiplexeur spectral et/ou un dispositif de détection cohérente ou directe ;

- le système optique comprend un émetteur optique pour produire au moins un faisceau lumineux monomode d'émission, dit « faisceaux d'émission », le système optique émettant un rayonnement précompensé selon un sens opposé à celle du rayonnement multimode incident ;

- le système optique comprend un sous-système d'émission, un sous-système de réception, le sous-système d'émission étant configuré à partir de paramètres déterminés dans le sous-système de réception ;

- le récepteur optique et l'émetteur optique sont couplés au dispositif de traitement ou au dispositif de multiplexage spatial par l'intermédiaire d'un circulateur optique ;

- l'émetteur optique produit une pluralité de faisceaux d'émission et est agencé pour contre propager une partie au moins de chaque faisceau d'émission selon un sens opposé au sens principal de propagation dans le dispositif de traitement ;

- Le système optique comprend un dispositif séparateur selon la longueur d'onde ou selon la polarisation, tel qu'un miroir ou un filtre dichroïque ;

- Le système optique comprend une source lumineuse, disposée en amont du démultiplexeur spatial, et produisant le rayonnement lumineux multimode incident ;

- Le système optique comprend un dispositif de mise en forme disposé en aval du deuxième dispositif actuateur de phase, le dispositif de mise en forme recevant les faisceaux convertis pour produire un faisceau lumineux mis en forme ;

- les phases relatives et les amplitudes relatives de consigne sont choisies pour donner une forme prédéterminée au faisceau lumineux mis en forme.

## BREVE DESCRIPTION DES FIGURES

D'autres caractéristiques et avantages de l'invention ressortiront de la description détaillée de l'invention qui va suivre en référence aux figures annexées sur lesquels :

- La figure 1 illustre les principes mis en œuvre dans un dispositif de traitement conforme à l'invention ;

- La figure 2 représente un circuit actuateur de phase ;

- La figure 3 illustre la conception d'une famille de mode de Walsh ;

- Les figures 4a, 4b, 4c illustrent des variantes d'un dispositif de traitement ;

- Les figure 5a, 5b illustrent un système optique de recombinaison de faisceaux ;

- Les figures 6a et 6b représentent deux configurations astucieuses d'un système optique de recombinaison de faisceaux ;

- La figure 7 illustre un exemple d'application du système optique pour la compensation du front d'onde ;

- La figure 8 représente un système optique pour la compensation du front d'onde ;

- Les figure 9a, 9b, 9c, 9d représentent des systèmes optiques permettant d'émettre un rayonnement lumineux pré compensé ;

- La figure 10 représente un système optique exploité pour la mise en forme d'un faisceau et le changement de forme d'un faisceau.

## DESCRIPTION DETAILLEE DE L'INVENTION

### Définitions

Par souci de clarté, on définit dans la présente demande un faisceau lumineux comme un rayonnement formé d'au moins un mode du champ électromagnétique, chaque mode formant une distribution spatio-fréquentielle de l'amplitude, de la phase, et de la polarisation du champ.

On désignera par « forme » d'un faisceau la distribution transverse de l'amplitude et de la phase du mode ou la combinaison des distributions transverses d'amplitude et de phase des modes composant ce rayonnement.

On désignera par « phases relatives » d'une pluralité de faisceaux monomodes, les écarts de phases existants entre chaque faisceau de la pluralité et un faisceau choisi comme faisceau de référence.

### Principes généraux

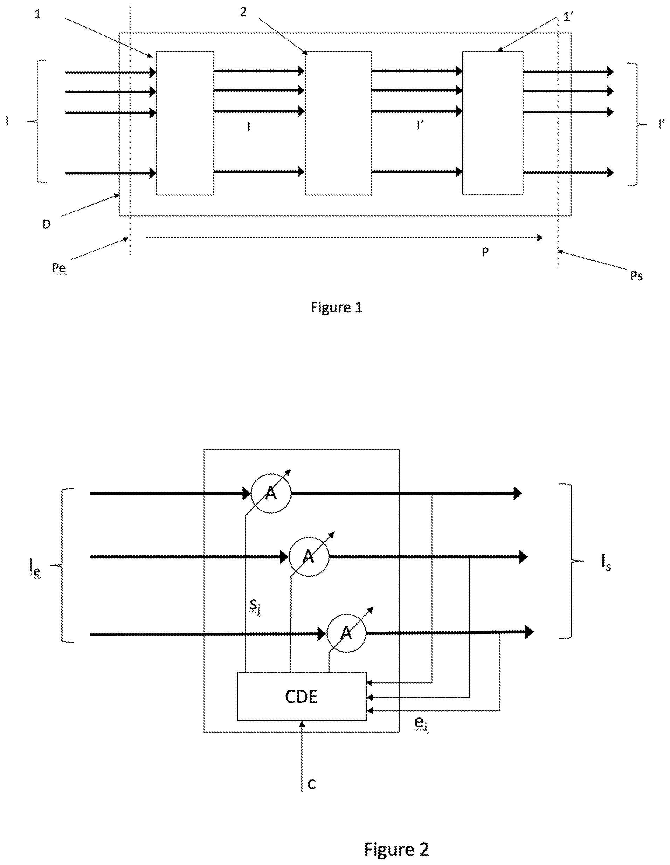

La figure 1 illustre les principes mis en œuvre dans un dispositif de traitement D conforme à plusieurs modes de mise en œuvre. Le dispositif D reçoit en entrée au moins deux faisceaux lumineux I monomodes et cohérents entre eux. Ces faisceaux I sont spatialement séparés, c'est-à-dire que leurs formes ne se s'intersectent pas ou peu au niveau d'un plan d'entrée Pe du dispositif D. Le dispositif D produit en sortie au moins deux faisceaux lumineux de sortie I' (désignés aussi « faisceaux convertis »), également spatialement séparés, dont les amplitudes et les phases sont régularisées. Le nombre de faisceaux lumineux incidents I et le nombre de faisceaux lumineux de sorties I' du dispositif sont identiques. Le nombre de faisceaux I, I' peut être choisi très librement, selon le besoin. Il est typiquement compris, entre 2 et 50, ou entre 2 et 100, voire plus.

On verra dans une section ultérieure de cette description plusieurs exemples d'application dans lesquels de tels faisceaux incidents, monomodes et cohérents entre eux peuvent être produits. Mais d'une manière générale, il peut s'agir d'un rayonnement lumineux multimode dont on aura spatialement séparé les modes ou d'une pluralité de faisceaux monomodes issus de sources synchronisées. Dans tous les cas, les faisceaux lumineux incidents I sont susceptibles de fluctuer dans le temps, en amplitude et en phase, indépendamment les uns des autres, même s'il n'est pas exclu qu'à un instant déterminé, certains au moins de ces faisceaux incidents I présentent les mêmes phases et amplitudes.

Les faisceaux incidents I peuvent être répartis spatialement librement dans le plan d'entrée Pe du dispositif, par exemple selon une ligne comme dans l'illustration schématique de la figure 1, ou disposés en matrice ou en hexagone. Cette disposition peut être assurée par un réseau de fibres formant un étage d'entrée du dispositif D (non représenté sur la figure 1) lorsque la propagation des faisceaux lumineux incidents I, en amont et/ou en aval du plan d'entrée Pe, est guidée. Mais la propagation des faisceaux lumineux incidents I peut également se faire en espace libre, et on peut alors éventuellement prévoir des pièces optiques (miroirs, prismes...) pour assurer l'agencement des faisceaux entre eux selon la disposition choisie dans le plan d'entrée Pe. Les mêmes commentaires s'appliquent vis-à-vis des faisceaux lumineux de sortie I' et de leur positionnement relatif dans un plan de sortie Ps. A ce titre, on peut prévoir de munir le dispositif D d'un étage de sortie, par exemple sous la forme d'un réseau de fibres optiques.

Dans le schéma de principe de la figure 1, on a représenté un sens principal de propagation P des faisceaux incidents I dans le dispositif D. Cette propagation est ici rectiligne, mais cela ne forme nullement une limitation, et on pourrait prévoir que les faisceaux se propagent dans le dispositif D selon un chemin optique plus complexe, défini par des guides d'onde reliant les différents circuits optiques du dispositif et/ou par des pièces optiques lorsque cette propagation s'effectue au moins en partie en espace libre.

D'une manière générale, le dispositif de traitement D cherche à régulariser l'amplitude et la phase des faisceaux incidents I. Par « régulariser », on signifie que les faisceaux convertis I' présentent des phases relatives et des amplitudes qui ne fluctuent pas dans le temps les uns par rapport aux autres, ou en tout cas dans une proportion bien moindre que les fluctuations affectant les phases relatives et les amplitudes des faisceaux lumineux incidents I. D'une manière générale, on cherche à ce que les phases relatives des faisceaux convertis I' se conforment à des phases de consigne, et que les amplitudes des faisceaux se conforment quant à eux à des amplitudes relatives déterminées, de consigne. Par exemple, dans certains cas, on pourra configurer le dispositif D pour que les faisceaux convertis I' présentent des phases relatives nulles, et des amplitudes toutes égales entre elles. Mais ce choix n'est nullement impératif, et on peut configurer le dispositif D et l'asservir pour une grande variété de consignes de phases relatives et d'amplitudes relatives des faisceaux lumineux de sorties I'. Les consignes de phases relatives et d'amplitudes relatives peuvent également être modifiées dans le temps, selon le besoin de l'application et/ou d'un utilisateur. Il est bien entendu possible que les phases et les amplitudes des faisceaux convertis I' fluctuent dans le temps (notamment lorsque l'énergie combinée des faisceaux incidents I varie), mais ces fluctuations des paramètres des faisceaux convertis I' ne sont pas entièrement indépendantes les uns des autres : par exemple les amplitudes respectives des faisceaux convertis I' peuvent fluctuer, mais ces fluctuations sont sensiblement les mêmes pour chacun des faisceaux. Aussi, une fois la régulation mise en œuvre par le dispositif de traitement D bien verrouillée, les faisceaux convertis I' sont bien plus stables dans le temps que les faisceaux incidents I, i.e. la dispersion de leurs paramètres respectifs (phases relatives et amplitudes relatives) est bien plus réduite.

Pour réaliser ce traitement de régularisation, le dispositif D qui fait l'objet de la présente description comprend au moins :

- un premier circuit optique actuateur de phase 1 ;
- un dispositif optique de conversion multiplan 2 (désigné « dispositif MPLC » dans la suite de cette description) ;
- un deuxième circuit optique actuateur de phase 1'.

Ces trois éléments sont disposés successivement dans le sens principal de propagation P, c'est-à-dire que le dispositif MPLC 2 est disposé optiquement en aval du premier circuit actuateur de phase 1, et que le deuxième circuit optique actuateur de phase 1' est disposé optiquement en aval du dispositif MPLC 2. Ces éléments sont reliés entre eux par des espaces libres ou par des guides d'onde permettant la propagation des faisceaux lumineux. Avantageusement, et pour garder toute sa simplicité, le dispositif de traitement D ne prévoit pas, directement en aval ou directement en amont du dispositif MPLC 2, d'autres circuits susceptibles de modifier sensiblement la phase ou l'amplitude des faisceaux que ceux listés ci-dessus.

Pour simplifier l'expression, on désignera par « faisceaux incidents » les faisceaux incidents au dispositif de traitement D et ceux se propageant jusqu'à un premier port optique du dispositif MPLC 2. On désignera par « faisceaux convertis », ceux produits par le dispositif MPLC 2 au niveau d'un deuxième port optique et se propageant en aval de ce dispositif 2 et en sortie du dispositif de traitement D.

Dans certains modes de réalisation, le dispositif MPLC 2 a pour fonction de régulariser l'amplitude du faisceau incident I. Pour se faire, il est important de bien maitriser les phases relatives des faisceaux lumineux entrant dans ce circuit. A cet effet, le dispositif de traitement 1 prévoit le premier circuit optique actuateur de phase 1, disposé directement en amont du dispositif MPLC 2.

Les transformations opérées par le dispositif MPLC 2 sur l'amplitude des faisceaux incidents I pour les régulariser affectent toutefois les phases relatives des faisceaux convertis I'. Aussi, le dispositif de traitement D prévoit un deuxième circuit optique actuateur de phase 1', directement en aval du dispositif MPLC 2, pour que les faisceaux convertis I', une fois traités par ce deuxième circuit 1', présentent à la fois des amplitudes et des phases relatives bien maitrisées.

D'une manière plus générale, les circuits optiques actuateur de phase 1, 1' forment des variables d'ajustement des faisceaux se propageant dans le dispositif de traitement D, qu'il est donc possible de modifier à loisir selon l'objectif applicatif visé.

La figure 2 représente à titre d'illustration un circuit actuateur de phase pouvant être exploité comme premier et/ou deuxième circuit 1, 1' du dispositif de traitement D de la figure 1.

Ce circuit comprend une pluralité de déphaseurs optiques A respectivement associés à des faisceaux lumineux d'entrées $I_e$ du circuit. Chaque déphaseur optique A fournit une réplique $I_s$ du faisceau lumineux d'entrée qui lui est associé, ajusté en phase d'une valeur commandable, mais dont l'amplitude reste sensiblement non modifiée. Un déphaseur optique A peut être mis en œuvre par un déphaseur ou une ligne à retard. Il peut ainsi s'agir d'un miroir continument déformable, ou d'un miroir déformable à segments, d'un modulateur spatial de lumière, d'un modulateur de phase électro-optique, d'une fibre étirée par un module piézoélectrique, d'un miroir sur cale piézoélectrique, ou de tout autre moyen adapté.

Le circuit de la figure 2 comprend également un circuit électro-optique de commande CDE. Ce circuit de commande reçoit en entrée des grandeurs $e_i$ représentatives du ou des faisceau(x) lumineux que l'on cherche à réguler, et élabore des signaux de commande $s_j$ des

déphaseurs optiques A visant à commander la valeur d'ajustement de phase. Le circuit de commande CDE peut également recevoir une grandeur de consigne c (ou un vecteur de grandeurs) définissant les grandeurs visées pour les paramètres du ou des faisceau(x) lumineux que l'on cherche à réguler. Ces grandeurs représentatives peuvent correspondre à une information de phase ou d'intensité du ou des faisceau(x) lumineux que l'on cherche à réguler.

D'une manière très générale, le dispositif de commande CDE met en œuvre un procédé de régulation, et produit les signaux de commande $s_j$ des déphaseurs optiques A pour que le ou des faisceau(x) lumineux que l'on cherche à réguler présentent bien des paramètres égaux ou se rapprochant de la grandeur de consigne.

A titre d'illustration, et comme cela est reproduit sur l'exemple de la figure 2, les entrées $e_i$ du dispositif de commande CDE peuvent correspondre à un prélèvement des faisceaux lumineux $I_s$ produit directement par le circuit. Le circuit de commande CDE peut alors déterminer les phases relatives de ces faisceaux, par exemple en les faisant interférer entre eux. On peut dans ce cas configurer le dispositif de commande CDE pour qu'il élabore les signaux de commande $s_j$ visant à ajuster le déphasage introduit par chaque déphaseur optique A de sorte que les phases relatives des faisceaux lumineux produit en sortie du $I_s$ circuit actuateur de phase corresponde à des phases relatives de consigne c, par exemple pour que ces phases relatives soient nulles.

Il n'est pas nécessaire que les entrées $e_i$ du dispositif correspondent précisément à des grandeurs représentatives des faisceaux lumineux $I_s$ produits en sortie du circuit actuateur. Les entrées $e_i$ peuvent correspondre à des grandeurs représentatives d'un ou d'une pluralité de faisceaux lumineux élaborés plus en aval.

A titre d'illustration, la régulation mise en œuvre par le dispositif de commande CDE peut chercher à optimiser une énergie résiduelle entre un faisceau cible (ou une pluralité de faisceaux cibles), c'est-à-dire un faisceau présentant les caractéristiques de phase et d'amplitude de consigne, et le faisceau réellement produit (ou les faisceaux réellement produits). Cette optimisation peut se fonder sur une méthode de gradient, sur une méthode stochastique, sur un interpolateur configuré par apprentissage, par exemple un réseau de neurones, sur un interpolateur configuré par logique floue, ou des méthodes plus conventionnelles de régulation, par exemple de Kalman, adaptative ou robuste.

Lorsqu'un dispositif de traitement exploite plusieurs circuits actuateur de phase, comme c'est le cas d'un dispositif de traitement D conforme aux modes de mis en œuvre décrits dans la présente demande, un unique dispositif de commande CDE peut être mutualisé pour commander les déphaseurs optiques A entrant dans la constitution de chacun de ces circuits.

Le dispositif MPLC 2 du dispositif de traitement présente quant à lui un premier port optique pour recevoir les faisceaux lumineux incidents I issus du premier circuit actuateur de phase 1. Il présente également un deuxième port optique à partir duquel se propagent des faisceaux lumineux I', dits « convertis », et produits par le dispositif MPLC 2.

On rappelle que dans un tel dispositif MPLC, un rayonnement lumineux incident subit une succession de réflexions et/ou de transmissions, chaque réflexion et/ou transmission étant suivie par une propagation du rayonnement en espace libre. Certaines au moins des pièces optiques sur lesquelles s'opèrent les réflexions et/ou les transmissions, et qui guident la propagation du rayonnement incident, présentent des zones microstructurées qui modifient le rayonnement lumineux incident.

Par « zone microstructurée » on signifie que la surface de la pièce optique présente sur cette zone un relief, qui peut par exemple se décomposer sous la forme de « pixels » dont les dimensions peuvent être comprises entre quelques microns à quelques centaines de microns. Il peut s'agir de métasurfaces. Le relief ou chaque pixel de ce relief présente une élévation variable par rapport à un plan moyen définissant la surface en question, d'au maximum quelques microns ou d'au maximum quelques centaines de microns. Quelle que soit la nature de la microstructuration des zones, une pièce optique présentant de telles zones forme un masque de phase introduisant un déphasage local au sein de la section transverse du rayonnement qui s'y réfléchit ou qui s'y transmet.

Ainsi, un rayonnement lumineux qui se propage au sein d'un dispositif MPLC subit une succession de déphasages locaux séparés par des propagations. La succession de ces transformations élémentaires (par exemple au moins quatre transformations successives comme par exemple 8, 10, 12, 14, voire au moins 20 transformations) établit une transformation globale du profil spatial du rayonnement incident. Il est ainsi possible de configurer les zones microstructurées de réflexion ou de transmission pour transformer un premier rayonnement lumineux, qui présente notamment une forme spécifique, en un deuxième rayonnement dont la forme est différente.

On trouvera dans les documents « Programmable unitary spatial mode manipulation », Morizur et Al, J. Opt. Soc. Am. A/Vol. 27, No. 11/November 2010 ; N. Fontaine et Al, (ECOC, 2017),"Design of High Order Mode-Multiplexers using Multiplane Light Conversion"; US9250454 et US2017010463 les fondements théoriques et des exemples de mise en œuvre pratique d'un dispositif MPLC.

Le dispositif MPLC 2 du dispositif de traitement D est configuré pour répartir l'énergie des faisceaux incidents I reçus sur le premier port optique entre les faisceaux convertis I' qui se propagent à partir du deuxième port optique. Cette répartition vise à régulariser l'amplitude des faisceaux convertis I'. Comme on l'a déjà précisé, cette répartition n'est pas forcément égalitaire, même si une telle répartition égalitaire de l'énergie entre les faisceaux convertis I' forme une possibilité.

Comme cela est présenté dans le détail dans les documents précités, les zones microstructurées portées par la ou les pièces optiques formant le dispositif MPLC 2 sont conçues et configurées pour opérer une conversion modale visant à décomposer le rayonnement lumineux reçu sur le premier port optique (ce rayonnement étant constitué, en combinaison, par les faisceaux incidents I) dans une famille de modes dite « d'entrée ». Les énergies présentes dans les modes de la famille d'entrée sont transportées et respectivement conformées aux modes d'une famille de modes « de sortie » au niveau du deuxième port optique. Le dispositif MPLC est configuré pour mettre en correspondance respective les modes de la base d'entrée et les modes de la base de sortie. Il s'agit d'un dispositif passif et dont la fonction de transfert est particulièrement stable et robuste.

Dans le cas du dispositif de traitement D de la figure 1, chaque mode de la famille d'entrée est associé à un unique faisceau lumineux reçu sur le premier port optique. Simultanément, chaque mode de la famille de sortie est associé à la pluralité de faisceaux convertis I', au niveau du deuxième port optique. L'énergie d'un faisceau, et plus précisément la part d'énergie du faisceau qui se projette dans le mode de la base d'entrée auquel il est associé, est donc répartie dans un des modes de la base de sortie, et donc dans la pluralité de faisceaux de sortie.

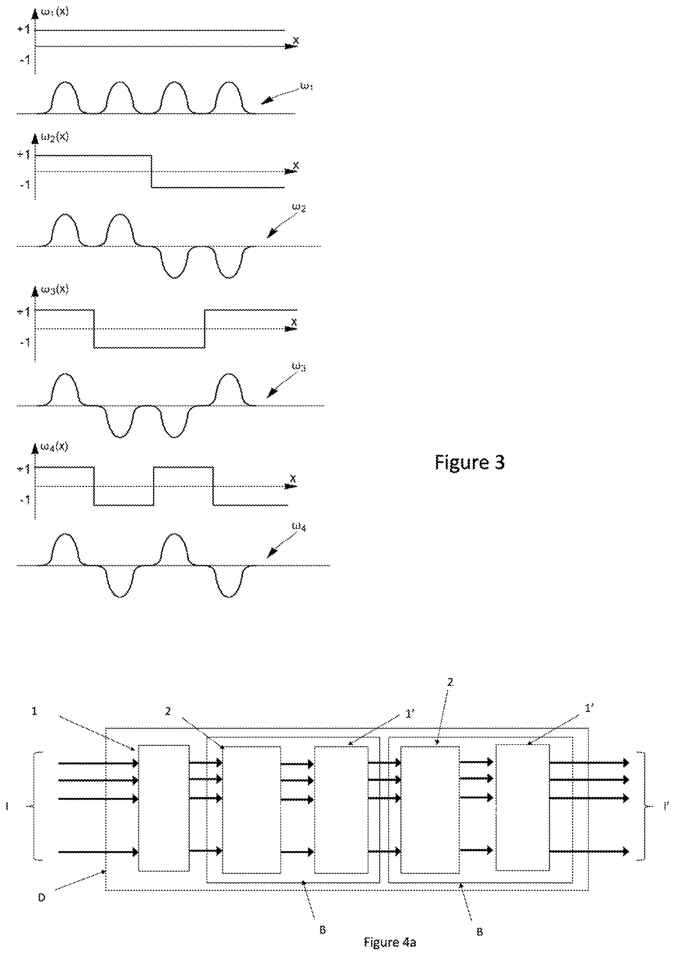

A titre d'exemple de configuration du dispositif MPLC 2, la famille des modes d'entrée peut comprendre une base de N modes gaussiens séparés, chaque mode de la base étant spatialement mis en correspondance avec un des N faisceaux lumineux reçus sur le premier port optique. La famille des modes de sortie peut être formée de N modes de Walsh. On rappelle que les modes de Walsh sont des modes comportant plusieurs lobes distincts, par exemple des lobes gaussiens. Une famille de N modes de Walsh peut être construite à partir d'une distribution de base respectivement multipliée par la fonction de Walsh $W_k(x)$, pour k = 1, 2...N, comme cela est illustré sur la figure 3 dans le cas d'une famille composée de 4 modes W1, W2, W3, W4 (en une dimension dans cette figure, étant entendu que dans le cadre de la demande ces modes s'étendent spatialement). Dans la représentation de la figure 3, les N lobes de la distribution de base sont gaussiens et d'amplitudes identiques, mais cela n'est pas nécessairement le cas.

Le dispositif MPLC 2 est configuré pour associer un mode gaussien de la base d'entrée vers un mode de Walsh de la base de sortie. L'énergie d'un faisceau reçu sur le premier port optique (en correspondance avec l'un des modes de la base d'entrée) est transportée dans le dispositif MPLC pour se conformer au mode de Walsh avec lequel ce mode de la base d'entrée est associé. Cette énergie est donc répartie dans chacun des lobes de ce mode. Lorsque l'on prend en compte tous les faisceaux incidents I reçus sur le premier port d'entrée, on comprend que le rayonnement lumineux au niveau du deuxième port optique présente N lobes dans lequel est concentré et répartie toute l'énergie des faisceaux incidents. Les faisceaux lumineux convertis correspondent aux lobes de ce rayonnement.

Bien entendu, les modes gaussiens et de Walsh pris en exemple ne sont donnés qu'à titre d'illustration. On pourrait choisir d'autres modes que ceux de Gauss pour constituer la famille de modes d'entrée et d'autres modes que ceux de Walsh pour constituer la famille de modes de sortie. Il peut ainsi s'agir d'une collection de modes de sortie correspondant à la transformée de Fourier discrète des modes d'entrée. Ainsi, pour le j-ème mode d'entrée (parmi N modes d'entrée), le mode de sortie associé, correspondant à un faisceau converti I', peut être constitué de N lobes, par exemple des lobes gaussiens, pour lesquels la phase du k-ème lobe est égale à :

$$\phi_{j,k} = \frac{2\pi j k}{N}$$

Selon un mode de mise en œuvre particulièrement avantageux, chaque mode de la famille de modes de sortie comprend une pluralité de lobes (comme c'est le cas dans l'exemple représenté sur la figure 3), mais ces lobes ne sont pas de formes purement gaussiennes : ils sont constitués d'un lobe principal (qui peut être gaussien) et d'un lobe secondaire, de plus petite dimension et de plus faible amplitude. Ces lobes secondaires ne sont pas destinés à collecter beaucoup d'énergie, mais peuvent servir à produire les entrées ei des dispositifs de commande CDE, par exemple celui du premier et/ou du deuxième circuit actuateur de phase 1. En produisant par le MPLC 2 des faisceaux secondaires (en correspondances avec les lobes secondaires des modes de la famille de modes de sortie), on évite de prélever dans les faisceaux convertis la part d'énergie nécessaire à la mise en œuvre de la régulation en phase et l'insertion d'une pièce optique pour réaliser ce prélèvement.

Il est possible de compléter le dispositif de traitement D de la figure 1, en aval du deuxième circuit optique actuateur de phase 1', d'au moins un bloc B constitué d'un autre dispositif MPLC 2 optiquement couplé à un autre circuit optique actuateur de phase 1'. Le dispositif de traitement D, d'une manière générale, peut donc être constitué d'une concaténation d'un nombre M de tels blocs B, en aval du premier circuit activateur de phase 1, et peut donc comprendre, de manière entrelacée, M+1 circuits activateurs de phase 1' et M dispositif MPLC 2. On peut de la sorte, en décomposant le traitement optique appliqué aux faisceaux incidents I en plusieurs étages - chacun mis en œuvre par un bloc B - mieux maitriser les transformations optiques opérées en simplifiant les opérations menées dans chaque étage. Une telle configuration en plusieurs étages est représentée sur la figure 4a.

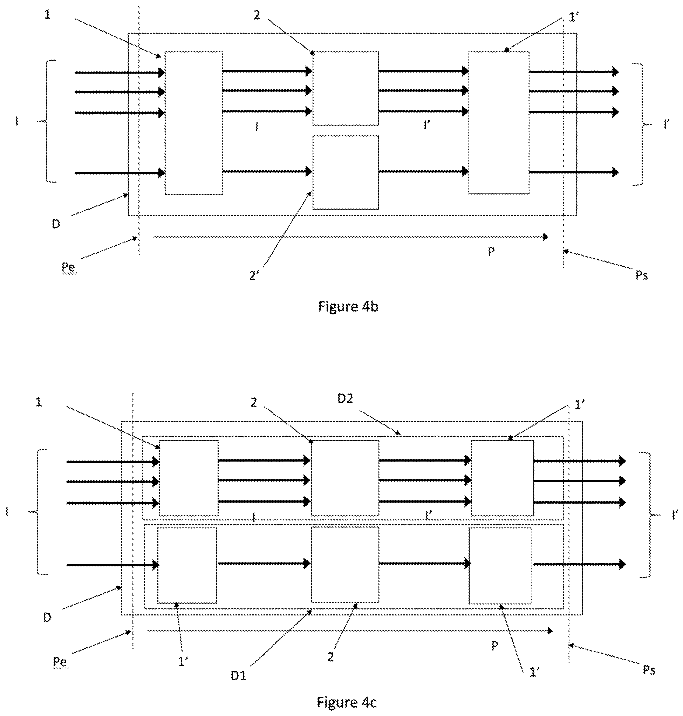

Alternativement ou en complément à cette variante, on peut prévoir que le dispositif de traitement D comporte un second dispositif MPLC 2', en parallèle avec le premier dispositif MPLC 2, comme cela est représenté sur la figure 4b. Une partie seulement des faisceaux incidents I s'appliquent à l'entrée du premier dispositif MPLC 2, les faisceaux incidents complémentaires s'appliquant au second dispositif MPLC 2'. Cette configuration peut être particulièrement utile lorsque le nombre de faisceaux incident est important, par exemple de l'ordre de 100 ou plus, afin de simplifier la conception des dispositifs MPLC 2, 2'.

Enfin, on peut prévoir que le dispositif de traitement D comporte deux dispositifs de traitement D1, D2, chacun de ces dispositifs étant conforme à la description générale qui vient d'être faite d'un tel dispositif de traitement. Une telle configuration est représentée sur la figure 4c.

## Système optique de recombinaison de faisceaux

Une application possible du dispositif de traitement D qui vient d'être présenté est celle de la recombinaison des faisceaux incidents I dans au moins un faisceau lumineux recombiné monomode I", dit « faisceau recombiné ».

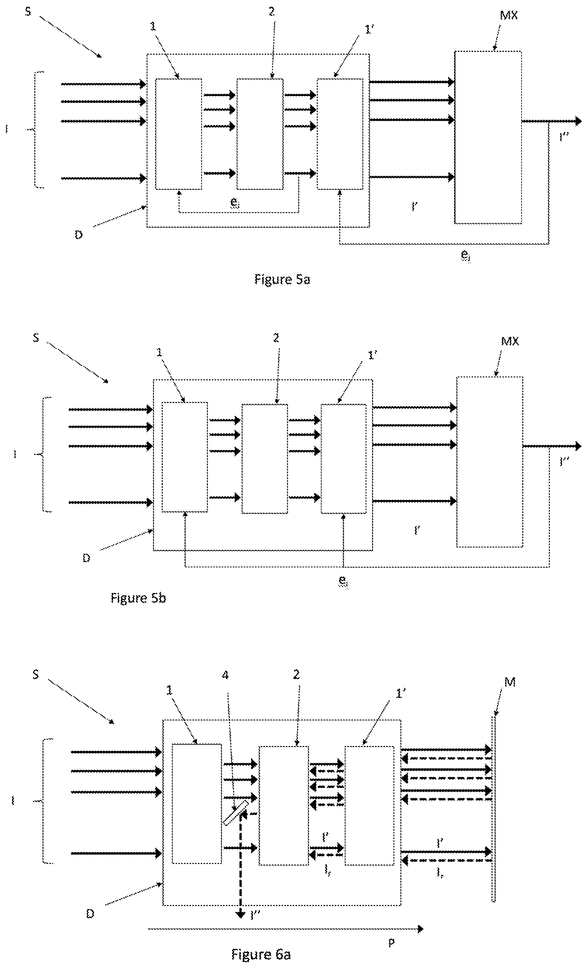

Dans cette application, illustrée sur les figures 5a et 5b, on forme un système optique S en disposant en aval du dispositif de traitement D, directement derrière le dernier circuit actuateur de phase 1, un dispositif de multiplexage spatial MX. Ce dispositif de multiplexage spatial MX (que l'on pourrait également désigner par « mélangeur optique » ou « dispositif de combinaison ») reçoit en entrée les faisceaux convertis I' pour les recombiner ensemble dans au moins un faisceau recombiné I". On note qu'il est possible que le dispositif de multiplexage spatial MX présente plusieurs sorties, et donc qu'il recombine les faisceaux convertis I' dans plusieurs faisceaux recombinés I". Le ou les faisceaux recombinés I" par le dispositif de multiplexage spatial MX concentrent alors toute l'énergie des faisceaux incidents I.

Le dispositif de multiplexage spatial MX peut être réalisé sous toute forme qui convient, par exemple par l'intermédiaire d'un dispositif MPLC, configuré comme celui décrit dans le document WO2020161126, par une lanterne photonique, des optiques de formes libres (de la traduction de l'expression anglo-saxonne « freeform optics »), un modulateur spatial de lumière, des éléments optiques diffractifs, un système interférométrique, un réseau de Dammann, etc. Le dispositif de multiplexage spatial MX, quel que soit son mode de mise en œuvre, peut prendre une forme intégrée photonique ou une forme de composant optique discret.

Selon une variante particulièrement intéressante les faisceaux convertis I' ne nécessitent pas de dispositif de multiplexage spatial MX pour être recombinés et former le faisceau recombiné I". Selon cette variante, en sortie du dispositif de traitement D, les faisceaux convertis I' sont agencés proches les uns des autres, dans une configuration d'ouverture en mosaïque (ou « tiled aperture » selon l'expression anglo-saxonne consacrée). Un tel agencement peut être produit par le MPLC 2, si celui-ci a été conçu pour produire un tel résultat. Dans cette configuration, le faisceau recombiné I" peut être très simplement formé par la simple juxtaposition des faisceaux convertis I', et le dispositif de multiplexage spatial MX peut être substitué, optionnellement, par de simples lentilles de collimation disposées en vis-à-vis de chaque faisceau converti I' afin de constituer le faisceau recombiné I''.

Dans l'illustration de la figure 5a, les entrées ei des dispositifs de commande du premier et du deuxième circuit actuateur de phase 1, 1' correspondent, respectivement, aux faisceaux convertis fournis par le dispositif MPLC, et au faisceau recombiné I". Dans l'illustration de la figure 5b, les entrées $e_i$ des dispositifs de commande du premier et du deuxième circuit actuateur de phase 1, 1' sont uniquement formées du faisceau recombiné I''. Comme on l'a déjà évoqué, on pourrait prévoir de mutualiser un unique circuit de commande CDE 'pour les deux circuits actuateur de phase 1, 1'.

La figure 6a représente une configuration astucieuse d'un système optique S mettant en œuvre un dispositif de traitement D pour cette application de recombinaison. Cette configuration résulte du fait que le dispositif MPLC 2 du dispositif de traitement (ou le plus aval de ces dispositifs si plusieurs sont présents) réalise lui-même une opération de démultiplexage : l'énergie fournie par un faisceau incident I sur le premier port optique du dispositif MPLC 2 est répartie sur tous les faisceaux convertis I' du deuxième port de ce dispositif. Un tel dispositif MPLC étant réversible, il réalise une opération de multiplexage identique à celle mise en œuvre par le dispositif de multiplexage spatial MX lorsque les faisceaux lumineux se propagent dans le sens inverse au sens principal P, donc du deuxième port optique vers le premier port optique.

On tire profit de cette observation dans l'agencement du système S représenté sur la figure 6a. Dans cet agencement, on dispose une pièce optique réfléchissante M, par exemple un miroir, en aval du dispositif de traitement D. Les faisceaux convertis I' sont réfléchis sur cette pièce optique réfléchissante M, et les faisceaux réfléchis $I_r$, en trait pointillé sur la figure 6a, se propagent dans le dispositif de traitement D dans le sens opposé au sens principal P de propagation. Ce faisant, les faisceaux réfléchis $I_r$ se propagent successivement dans le deuxième circuit actuateur de phase 1' puis dans le dispositif MPLC 2, via le deuxième port optique. Celui-ci recombine ces faisceaux lumineux $I_r$ pour former un faisceau recombiné I", rendu disponible sur le premier port optique du dispositif MPLC 2. Pour simplifier la figure 6a, on n'a pas représenté sur cette figure les entrées $e_i$ des circuits actuateur de phase 1, 1', mais elles sont naturellement présentes.

On peut prévoir un dispositif d'extraction 4, par exemple un circulateur optique, du faisceau lumineux recombiné I'', le dispositif d'extraction 4 étant disposé entre le premier circuit actuateur de phase 1 et le dispositif de conversion multiplan 2, de manière à rediriger le faisceau lumineux recombiné et l'extraire du dispositif de traitement D, avant qu'il ne se propage dans le premier circuit actuateur de phase 1. Dans la configuration de la figure 6a, on choisit les valeurs de consigne du dispositif de traitement D, en phases et en amplitudes, de sorte que les faisceaux réfléchis Ir, se propageant à travers le dispositif MPLC 2, se recombinent dans un faisceau recombiné I'' (ou une pluralité de faisceaux recombinés I'') en correspondance avec au moins un mode de la base d'entrée de ce dispositif 2.

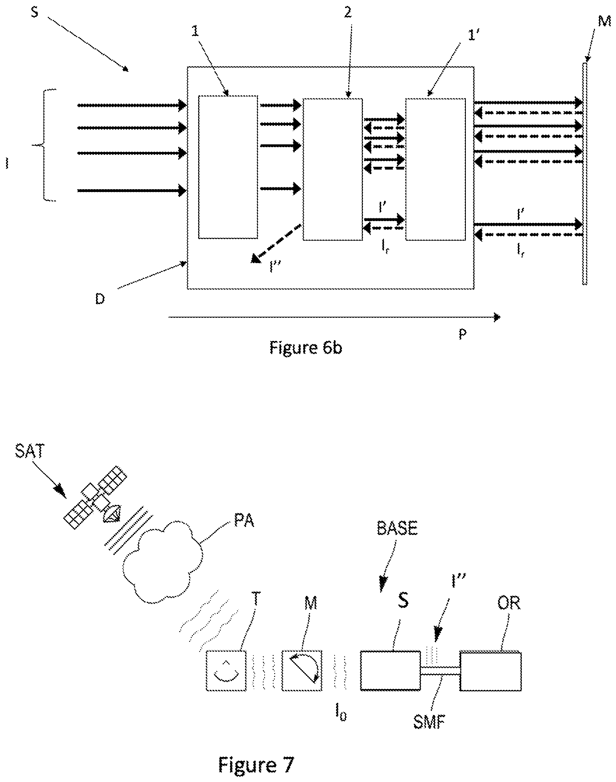

Dans une variante de cette configuration représentée sur la figure 6b, on peut prévoir de concevoir le MPLC avec une famille de modes d'entrée et de sortie présentant chacune N+1 modes, N correspondant au nombre de rayonnements incidents reçus sur le premier port optique du dispositif MPLC 2. Un mode de la famille d'entrée est réservé, c'est-à-dire qu'aucun des faisceaux incidents I n'est mis en correspondance, dans le plan d'entrée Pe du dispositif MPLC 2, avec ce mode réservé.

Dans le même temps, le dispositif MPLC 2 peut être configuré de sorte que l'illumination de ce mode réservé produise des faisceaux convertis I' ayant des caractéristiques de phases relatives et d'amplitudes déterminées. Ces caractéristiques forment les consignes de phases relatives et d'amplitudes du dispositif de traitement D qui s'appliquent au rayonnement réfléchi Ir en sortie du deuxième circuit actuateur de phase 1'. Lorsque la régulation mise en œuvre par le ou les dispositif(s) de commande CDE est bien verrouillée sur ces consignes de phases relatives et d'amplitudes, les rayonnements réfléchis Ir sont recombinés par le dispositif MPLC dans un rayonnement combiné I'' généré sur le premier port optique uniquement au niveau du mode réservé de la famille de modes d'entrée. On évite de cette manière de placer un dispositif d'extraction complexe dans le dispositif de traitement, comme cela est le cas dans la configuration de la figure 6a.

On note que dans le système optique des figures 6a, 6b, le deuxième circuit actuateur de phase 1' est traversé une première fois par le faisceau converti I' puis par la réflexion de ce faisceau, et que donc les déphasages impartis aux faisceaux est le double de celui imposé par les déphaseurs optiques A. Cela peut naturellement être pris en compte dans la régulation mise en œuvre par le dispositif de commande CDE de ces circuits. Dans les configurations des figures 6a, 6b le dispositif MPLC 2 constitue le dispositif de multiplexage spatial MX permettant de recombiner les faisceaux lumineux convertis I'.

## Application du système optique de recombinaison pour la compensation de la distorsion d'un rayonnement lumineux

En référence à la figure 7, on présente un exemple d'utilisation dans le domaine des télécommunications du système optique S de recombinaison pour la compensation de la distorsion d'un front d'onde.

Dans cet exemple purement illustratif, un émetteur SAT - ici un satellite de communication - émet un rayonnement lumineux de transmission d'un message en direction d'une station de base BASE de manière parfaitement conventionnelle. Le rayonnement lumineux peut présenter plusieurs longueurs d'onde, comme c'est usuellement le cas pour les transmissions de type WDM. Le rayonnement lumineux directement émis par le satellite SAT présente une forme régulière. Au cours de sa propagation en espace libre, le rayonnement émis est soumis aux perturbations atmosphériques de l'atmosphère PA, si bien que le rayonnement lumineux arrivant à la station de base BASE, présente des aberrations d'amplitude et de phase. Ce phénomène affecte la forme de ce rayonnement, qui prend une forme variable dans le temps, de manière erratique, et irrégulière. En conséquence, ce rayonnement s'injecte avec peu d'efficacité, et de manière variable dans le temps, dans une fibre optique monomode nécessaire à l'amplification optique du signal et sa détection cohérente.

En dépit de ce phénomène, on cherche à exploiter dans la station de base BASE le rayonnement reçu par l'intermédiaire d'un récepteur optique OR afin de décoder le message transmis, par détection directe ou cohérente. A cet effet, on a prévu un télescope T pour collecter une partie du rayonnement lumineux reçu avec l'éventuelle assistance d'autres éléments optiques tel qu'un miroir orientable M. Le rayonnement reçu (et plus précisément la partie collectée par le télescope T de ce rayonnement) est dirigé vers le système optique S exploité ici pour la compensation de la distorsion d'un rayonnement lumineux f $I_0$. Celui-ci cherche à compenser au moins en partie cette distorsion afin de fournir un faisceau lumineux monomode recombiné I'' dont la distorsion est moindre que celle du rayonnement reçu $I_0$. Le faisceau lumineux monomode recombiné I'' se couple alors avec plus d'efficacité et de stabilité dans une fibre monomode SMF qui permet de guider ce faisceau vers le récepteur optique OR.

Dans cet exemple d'application, l'énergie du rayonnement reçue au niveau du télescope T est généralement très faible, notamment parce que la puissance de l'émetteur embarqué dans le satellite SAT est limitée, et à cause des erreurs de pointé, déformation, expansion du faisceau lumineux émis au cours de sa propagation en espace libre. Il est donc important, pour des raisons de bande passante de transmission, que le système optique S transmette un maximum de l'énergie collectée au récepteur OR.

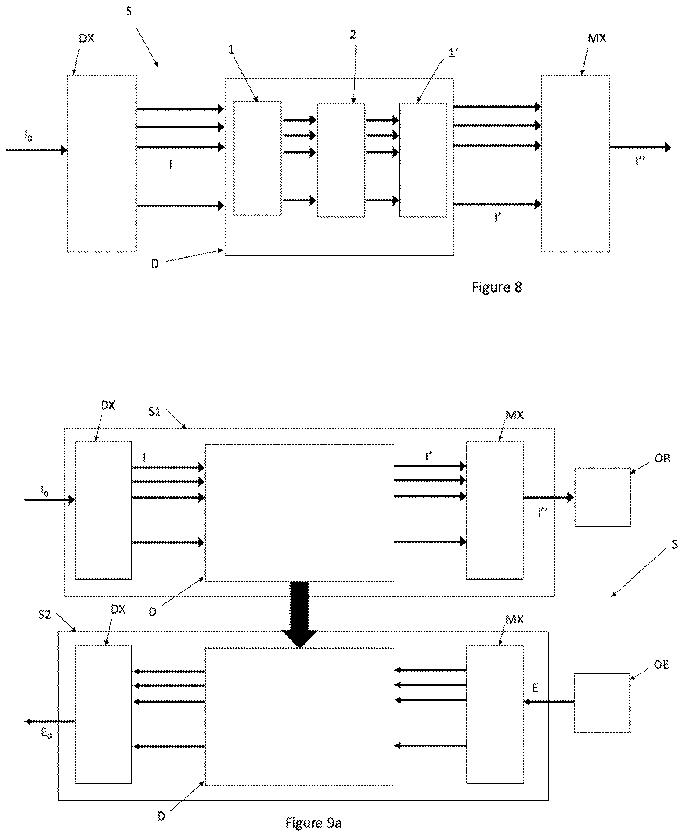

La figure 8 illustre le système optique S exploité pour la compensation de la distorsion d'un front d'onde représenté sur la figure 7. Dans ce système S, on reconnaît le dispositif de traitement D et le dispositif de multiplexage spatial MX. On note que n'importe lequel des systèmes optiques S présentés en relation avec la description des figures 5a, 5b 6a, et 6b pourrait convenir dans cette application particulière. Le système optique de la figure 8 comprend en outre un démultiplexeur spatial DX, disposé en amont du premier dispositif actuateur de phase 1, le démultiplexeur spatial DX recevant un rayonnement lumineux multimode incident $I_0$ et produisant les faisceaux incidents I. A nouveau, ce démultiplexeur DX peut prendre toute forme qui convient, un dispositif MPLC, une lanterne photonique, etc.

Le système optique S reçoit donc le rayonnement lumineux multimode incident $I_0$ qu'il décompose dans la pluralité de faisceaux incidents I. Ces faisceaux monomodes I, dont les caractéristiques (amplitudes et phases) sont très variables à cause des aberrations d'amplitude et de phase du rayonnement incident I0 reçu, se projettent dans le dispositif de traitement D. Celui-ci régularise ces faisceaux incidents I, comme cela a été présenté dans une section initiale de cette description, en ajustant les déphaseurs optiques A des circuits actuateur de phase 1, 1'. Les faisceaux convertis I', et donc régularisés, sont recombinés par le dispositif de multiplexage spatial MX pour former le faisceau lumineux recombiné I'', monomode. Celui-ci peut être injecté dans la fibre monomode SMF permettant de le guider au récepteur OR à fin d'analyse et/ou décodage du message transmis. On peut prévoir que le récepteur OR intègre des fonctions d'amplification du faisceau lumineux recombiné I'', de démultiplexage spectral, notamment dans le cadre d'une transmission WDM, et détection cohérente ou directe.

On note que la solution proposée est particulièrement originale, dans la mesure où elle ne nécessite pas de traiter le rayonnement lumineux multimode incident $I_0$ par un dispositif d'optique adaptative comme cela est souvent le cas dans les solutions de l'état de la technique visant à compenser la distorsion d'un front d'onde d'un rayonnement lumineux.

Les déphasages impartis par les déphaseurs optiques A des circuits actuateur de phase 1, 1', lorsque la régulation mise en œuvre par le ou les dispositif(s) de commande CDE est bien verrouillée, forment en quelque sorte une signature des perturbations subies par le rayonnement multimode incident I0 au cours de sa propagation.

Dans une version améliorée du système optique S qui vient d'être présentée, on profite du verrouillage de cette régulation pour exploiter ce système optique S, ou un système optique siamois, en émission. Dans ce mode d'émission, on émet et on propage un rayonnement d'émission « pré-compensé », c'est-à-dire déformé de telle sorte que, lorsque ce rayonnement atteint sa cible (ici l'émetteur SAT qui émet le rayonnement lumineux de transmission originel), ce rayonnement présente une déformation de son front d'onde réduit. Cette pré compensation est précisément celle définie par les déphasages impartis des déphaseurs optiques A des circuits actuateur de phase 1, 1'.

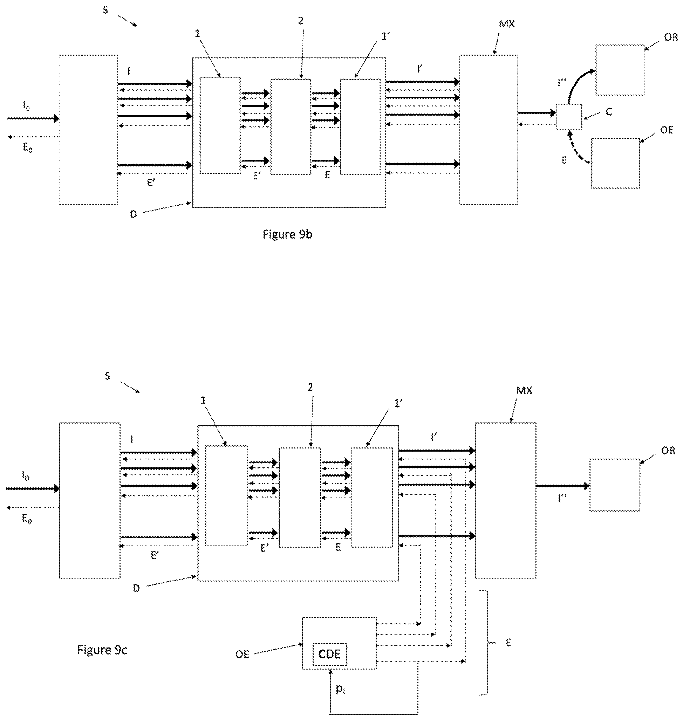

On présente sur les figures 9a, 9b et 9c des systèmes optiques S configurés pour mettre en œuvre une telle émission d'un rayonnement précompensé.

Le système optique S de la figure 9a, est composé de deux sous-systèmes S1, S2 parfaitement identiques, siamois. Le premier sous-système S1 est un sous-système de réception, tel que celui-ci a été décrit précédemment dans les différentes configurations exposées. Il est composé d'un démultiplexeur DX, d'un système de traitement D et d'un dispositif de multiplexage spatial MX. Il reçoit donc un rayonnement lumineux multimode incident I0 et fourni un faisceau lumineux recombiné I''. Cette transformation conduit le ou les dispositif(s) de commande CDE à établir, pour des durées déterminées, les valeurs des déphasages appliqués au déphaseurs optiques A des circuits actuateur de phase 1, 1'. Comme on vient de l'énoncer ces valeurs de déphasage « signent » la nature des perturbations subies par le rayonnement multimode incident I0 au cours de sa propagation.

Le deuxième sous-système S2 est un sous-système d'émission. On retrouve dans ce sous-système S2, les mêmes démultiplexeur DX, système de traitement D, dispositif de multiplexage spatial MX que dans le sous-système S1. En plus, le sous-système S2 est associé à un émetteur optique OE, par exemple un émetteur télécom produisant un rayonnement modulé en amplitude ou en phase par modulation directe ou cohérente. Cet émetteur OE émet un faisceau monomode E qui se propage successivement dans le dispositif de multiplexage spatial MX, le système de traitement D et le démultiplexeur DX, afin d'émettre un rayonnement d'émission E0 dans une direction opposée à celle du rayonnement incident I0. Afin de compenser les distorsions de phase et d'amplitude que ce rayonnement E0 va subir au cours de sa propagation, on prévoit de configurer le sous-système d'émission S2 en appliquant aux déphaseurs optiques A de ses circuits actuateur de phase les mêmes valeurs que celles déterminées par le dispositif de commande CDE du premier sous-système de réception S1, ou des valeurs dérivées de celle-ci. En d'autres termes, le sous-système d'émission S2 est configuré à partir de paramètres déterminés dans le sous-système de réception S1. Ces paramètres peuvent correspondre aux valeurs des déphasages appliqués aux déphaseurs optiques A des circuits actuateur de phase 1, 1' du sous-système de réception S1, ou à des paramètres liés à ces valeurs. De la sorte, les deux sous-systèmes S1, S2 sont parfaitement siamois, et le rayonnement d'émission E0 est précompensé à partir des informations de distorsion collectées dans le sous-système de réception S1.

Dans le système optique S de la figure 9b, on exploite un unique dispositif de traitement pour simultanément recevoir le rayonnement incident multimode I0 et émettre le faisceau d'émission E pré compensé. Le récepteur optique OR et l'émetteur optique EO sont disposés tous deux en aval du dispositif de multiplexage spatial (dans le sens de propagation du rayonnement recombiné I"), et ces rayonnements se propagent, dans le démultiplexeur DX, le système de traitement D et le dispositif de multiplexage spatial MX selon les mêmes chemins optiques, mais selon des directions opposées. On a prévu dans le montage représenté sur la figure 9b un circulateur optique C pour diriger le faisceau recombiné I" vers le receveur optique, et pour diriger le rayonnement d'émission vers le dispositif de multiplexage spatial MX. Ces propagations peuvent être fibrées.

D'une manière plus générale, et selon qu'un dispositif de multiplexage spatial MX soit ou non inclus dans le système optique S, le récepteur optique OR et l'émetteur optique OE peuvent être couplés au dispositif de traitement D ou au dispositif de multiplexage spatial MX par l'intermédiaire d'un circulateur optique C.

Dans une variante non représentée du système de la figure 9b, on peut omettre le circulateur optique C. On peut néanmoins exploiter le système optique S en émission comme en réception, par exemple en alternant son fonctionnement entre l'un et l'autre de ces deux modes. Alternativement, on peut choisir le faisceau d'émission E pour qu'il présente une polarisation ou une longueur d'onde différente d'une polarisation ou d'une longueur d'onde des faisceaux incidents I, et insérer un dispositif séparateur selon la longueur d'onde ou selon la polarisation, tel qu'un miroir ou un filtre dichroïque.

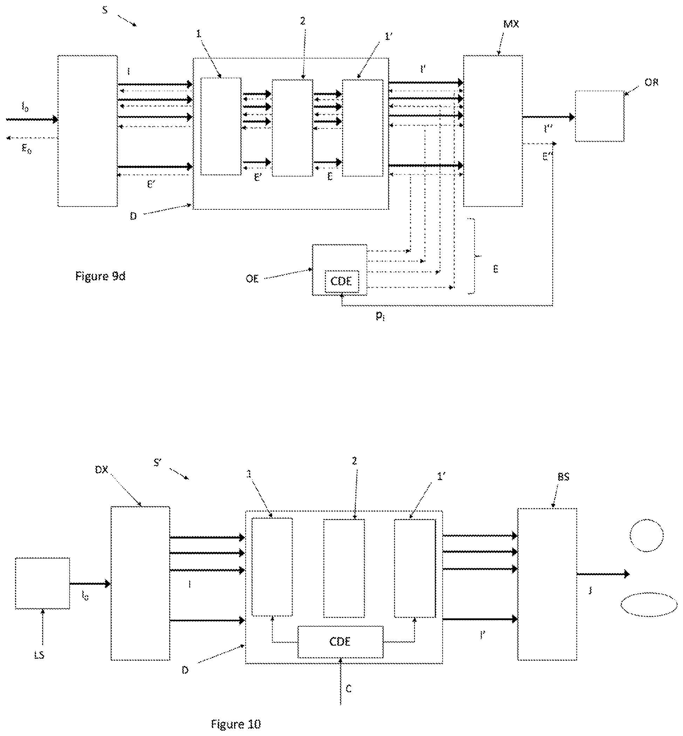

Dans les systèmes optiques S des figures 9c, 9d, l'émetteur optique OE produit une pluralité de faisceaux d'émission E monomodes. Ces faisceaux présentent des amplitudes relatives et des phases relatives bien maitrisées, qui sont donc stables dans le temps. L'émetteur OE comprend une source maître produisant un rayonnement lumineux maître. Il peut par exemple s'agir d'une source laser. La source maître est reliée à un séparateur optique pour établir une pluralité de faisceaux à partir du rayonnement lumineux maître. Pour permettre l'asservissement en phase des faisceaux lumineux produits, les faisceaux sont couplés à un circuit actuateur de phase conforme au circuit représenté sur la figure 2. L'émetteur optique OE LS peut aussi prévoir également un étage d'amplification optique associé à chaque faisceau pour fournir des faisceaux lumineux d'émission E exploitables. Et comme on l'a déjà signalé, l'émetteur optique OE peut comprendre un modulateur en amplitude et/ou en phase de chaque faisceau.

Dans les systèmes optiques S configurés en émission-réception des figures 9c et 9d, l'émetteur optique OE est agencé pour contre-propager une partie au moins de chaque faisceau d'émission E selon une direction opposée à la direction principale de propagation P dans le dispositif de traitement D. Les faisceaux d'émission E présentent avantageusement une polarisation ou une longueur d'onde différente d'une polarisation ou d'une longueur d'onde des faisceaux incidents I. Les faisceaux d'émission E se propagent donc dans ce dispositif de traitement D et subissent donc les transformations inverses à celles appliquées au faisceau lumineux incident I. Tout comme dans les deux exemples précédents, le dispositif de traitement D établit donc une pluralité de faisceaux convertis d'émission E' qui sont recombinés par le démultiplexeur DX pour fournir le rayonnement d'émission E0, pré compensé.

Dans le système optique S de la figure 9c, les entrées $p_i$ du dispositif de commande CDE du circuit actuateur de phase de l'émetteur optique OE correspondent à un prélèvement des faisceaux lumineux E produit directement par cet émetteur OE. Dans le système de la figure 9d, les faisceaux d'émission sont séparés par un séparateur optique (non représenté) et une partie des faisceaux d'émission E sont également dirigés vers le dispositif de multiplexage spatial MX, par exemple par miroir séparateur de faisceau ou un circulateur optique. Cette partie des faisceaux d'émission sont donc recombinés dans un faisceau monomode E" dont les caractéristiques forment les entrées $p_i$ du dispositif de commande du circuit actuateur de phase de l'émetteur OE. Dans cette figure, la sortie du dispositif de multiplexage spatial MX est donc exploitée pour piloter l'émetteur optique OE.

Application du dispositif de traitement D au changement de la forme d'un faisceau

La figure 10 représente un système optique S' exploité pour la mise en forme d'un faisceau et/ou le changement de forme d'un faisceau. Ce système peut être notamment utile dans les applications de mise en forme dynamique de la lumière laser par exemple pour le traitement laser de pièces, le façonnage, la découpe, le soudage, le perçage, la fonctionnalisation de surface, l'ablation de couches minces, ou la fabrication additive. On sait que dans ces applications il peut être utile de modifier la forme du faisceau qui se projette sur la pièce, selon la nature de cette pièce ou du traitement à réaliser. On sait également que dans ces applications que le faisceau qui se projette sur la pièce présente une puissance particulièrement importante, par exemple de l'ordre de 100W jusque 20kW en mode continu et, en mode impulsionnel, de 10 micro-Joules à quelques milli-Joules, ou plus.

Sur le système S' représenté sur cette figure, on trouve une source lumineuse LS produisant un rayonnement lumineux incident I0, séparé par le démultiplexeur DX en une pluralité de faisceaux incidents I monomodes. Ces faisceaux I présentent des amplitudes relatives et des phases relatives qui ne sont pas parfaitement maitrisées. Une des raisons peuvent provenir du fait que, dans un environnement industriel dans lequel la source laser LS opère, celle-ci peut être soumise à des déplacements incontrôlés, comme des vibrations. Ces mouvements incontrôlés affectent la régularité des faisceaux incidents et notamment leurs phases respectives.

On retrouve également sur ce système optique S' de la figure 10, en aval du dispositif de traitement D, directement derrière le dernier circuit actuateur de phase 1, un dispositif de mise en forme BS qui présente ici une sortie permettant de fournir le faisceau monomode mis en forme J, ce faisceau formant le faisceau de traitement laser des pièces.

Lorsque les faisceaux convertis I' à l'entrée du dispositif de mise en forme BS sont préparés par le dispositif de traitement D selon une première configuration définie par les amplitudes relatives et les phases relatives de consigne, le dispositif de mise en forme BS combine ces faisceaux convertis I' et transporte leur énergie pour former un faisceau mis en forme J de forme sensiblement ronde. De la même manière, lorsque les faisceaux convertis I' à l'entrée du dispositif de mise en forme BS sont préparés par le dispositif de traitement D selon une seconde configuration définie par des secondes amplitudes relatives et phases relatives de consigne, le dispositif de mise en forme BS traite ces faisceaux convertis I' et transporte leur énergie pour former un faisceau mis en forme J de forme sensiblement ovale.

Le dispositif de mise en forme BS peut avantageusement être mis en œuvre par un dispositif MPLC de mise en forme, spécifiquement configuré pour réaliser cette transformation, c'est-à-dire transformer les faisceaux convertis, lorsque ceux-ci sont conformes aux amplitudes et phases relatives de consigne de la première configuration, pour produire un rayonnement combiné de forme ronde, et transformer les faisceaux convertis, lorsque ceux-ci sont conformes aux amplitudes et phases relatives de consigne de la deuxième configuration, pour produire un rayonnement combiné de forme ovale. Le dispositif de mise en forme BS peut alternativement ou en complément comprendre des optiques de forme libre, des éléments optiques diffractifs... Les amplitudes et phases relatives de consigne constituent en quelque sorte une consigne de forme, permettant de donner une forme prédéterminée au faisceau recombiné I", choisir ici entre une forme ronde et une forme ovale.

Bien entendu les formes ronde et ovale du faisceau mis en forme J sont données à titre d'illustration uniquement, et d'une manière plus générale, le circuit de mise en forme BS peut être configuré pour former un faisceau mis en forme J pouvant présenter des formes variées. Par exemple, la famille de modes de sortie ayant servi à la conception du circuit de mise en forme BS, peut comprendre des modes de Hermite-Gauss, et des combinaisons spécifiques de ces modes peuvent être choisies par l'intermédiaire de la consigne « de forme » C appliquée au système optique S'. De la sorte, on peut changer la forme du faisceau mis en forme J, par exemple sa taille, et son défocus.

On retrouve ainsi sur l'illustration de la figure 10 le dispositif de traitement D conforme à la description générale qui en a été faite dans une section antérieure de cette description. Ce dispositif reçoit donc ici une consigne de forme C fournie en entrée d'un dispositif de commande CDE des circuits actuateur de phase 1, 1'. Cette consigne de forme est interprétée par le dispositif de commande CDE pour sélectivement conformer les faisceaux convertis I' à la première configuration d'amplitudes relatives et de phases relatives ou à la seconde configuration d'amplitudes relatives et de phases relatives. Dit autrement, lorsque l'on applique une première consigne de forme C sur le dispositif de traitement D, celui produit des faisceaux convertis I' se conformant à la première configuration, et lorsque l'on applique une seconde consigne de forme C, différente de la première, le dispositif de traitement D produit des faisceaux convertis I' se conformant à la seconde.

Ainsi, avec le système S' représenté sur la figure 10, on peut choisir la forme du faisceau J de puissance qui s'appliquera sur la pièce à traiter, et la modifier en continu, en choisissant et en faisant évoluer dans le temps la consigne de forme C appliquée au dispositif de traitement D.

Bien entendu l'invention n'est pas limitée aux modes de mise en œuvre décrits et on peut y apporter des variantes de réalisation sans sortir du cadre de l'invention tel que défini par les revendications.

## Revendications

1. Dispositif de traitement (D) d'au moins deux faisceaux lumineux monomodes et cohérents entre eux, dits « faisceaux incidents », les faisceaux incidents (I) présentant des phases et/ou des amplitudes susceptibles de varier, le dispositif de traitement (D) comprenant au moins, successivement reliés entre eux par des espaces libres ou par des guides d'onde selon un sens principal de propagation (P) :

   - un premier circuit actuateur de phase (1) pour ajuster les phases relatives des faisceaux incidents (I) ;
   - un dispositif de conversion multiplan (2) pour recevoir, sur un premier port optique, les faisceaux lumineux issus du premier circuit actuateur de phase (1) et configuré pour répartir l'énergie de ces faisceaux vers au moins deux faisceaux lumineux monomodes, dits « faisceaux convertis », produits au niveau d'un deuxième port optique;
   - un deuxième circuit actuateur de phase (1') disposé en aval du dispositif de conversion multiplan (2) pour ajuster les phases relatives des faisceaux convertis (I').

2. Dispositif de traitement (D) selon la revendication précédente dans lequel les faisceaux convertis (I') en sortie du deuxième actuateur de phase (1') présentent des amplitudes relatives et des phases relatives respectivement conformes à des amplitudes relatives de consigne et à des phases relatives de consigne.

3. Dispositif de traitement (D) selon l'une des deux revendications précédentes dans lequel le dispositif de conversion multiplan (2) comprend une pluralité de zones microstructurées disposées sur au moins un élément optique pour intercepter et modifier spatialement les phases respectives des faisceaux incidents (I) au cours d'une pluralité de réflexions ou de transmissions séparées par une propagation libre.

4. Dispositif de traitement (D) selon l'une des revendications précédentes dans lequel le premier dispositif actuateur de phase (1) et le deuxième dispositif actuateur de phase (1') comprennent une pluralité de déphaseurs optiques (A) associées aux faisceaux incidents (I) et le dispositif de traitement (D) comprend au moins un dispositif de commande (CDE) pour élaborer des signaux de commande ($s_j$) des déphaseurs optique (A).

5. Système optique (S, S') comprenant un dispositif de traitement (D) selon l'une des revendications précédentes et comprenant un démultiplexeur spatial (DX), disposé en amont du premier dispositif actuateur de phase (1), le démultiplexeur spatial (DX) recevant un rayonnement lumineux multimode incident ($I_0$) et produisant les faisceaux incidents (I).

6. Système optique (S, S') selon la revendication précédente dans lequel le démultiplexeur spatial (DX), est mis en œuvre par un dispositif de conversion multiplan.

7. Système optique (S, S') selon l'une des deux revendications précédentes, les faisceaux convertis (I') étant agencées dans une configuration d'ouverture en mosaïque, la juxtaposition des faisceaux convertis (I') produisant un faisceau lumineux recombiné monomode (I'').

8. Système optique (S, S') selon l'une des revendications 5 à 6 comprenant un dispositif de multiplexage spatial (MX ; 2) disposé en aval du deuxième dispositif actuateur de phase (1'), le dispositif de multiplexage spatial (MX ; 2) recevant les faisceaux convertis (I') pour les recombiner dans un faisceau lumineux recombiné monomode (I'').

9. Système optique (S, S') selon la revendication précédente dans lequel le dispositif de multiplexage spatial (MX) est mis en œuvre par un dispositif de conversion multiplan.

10. Système optique (S, S') selon l'une des deux revendications précédentes, comprenant une pièce optique réfléchissante (M) disposée directement en aval du deuxième circuit actuateur de phase (1') pour rétro propager les faisceaux convertis (I') à travers le deuxième circuit actuateur de phase (1') et le dispositif de conversion multiplan (2) et fournir le faisceau lumineux recombiné monomode (I'') au niveau du premier port optique du dispositif de conversion multiplan (2).

11. Système optique (S, S') selon la revendication précédente comprenant un dispositif d'extraction (4) du faisceau lumineux recombiné monomode (I''), le dispositif d'extraction étant disposé entre le premier circuit actuateur de phase (1) et le dispositif de conversion multiplan (2).

12. Système optique (S, S') selon la revendication 10 dans lequel le faisceau lumineux recombiné monomode (I'') est formé uniquement au niveau d'un mode réservé du premier port optique du dispositif de conversion multiplan (2).

13. Système optique (S) selon l'une des revendications 7 à 12 dans lequel le dispositif de traitement est couplé à une fibre optique monomode (SMF) dans laquelle le faisceau lumineux recombiné monomode (I'') est injecté.

14. Système optique (S) selon la revendication précédente comprenant un récepteur optique (OR) pour recevoir le faisceau lumineux recombiné monomode (I'').

15. Système optique (S) selon la revendication précédente, dans lequel le récepteur optique (OR) comprend un amplificateur optique du faisceau lumineux recombiné monomode (I''), un démultiplexeur spectral et/ou un dispositif de détection cohérente ou directe.

16. Système optique (S) selon l'une des revendications 13 à 15 comprenant un émetteur optique (OE) pour produire au moins un faisceau lumineux monomode d'émission (E), dit « faisceaux d'émission », le système optique (S) émettant un rayonnement précompensé (E0) selon un sens opposé à celle du rayonnement multimode incident (I0).

17. Système optique (S) selon la revendication précédente comprenant un sous-système d'émission (S1), un sous-système de réception (S2), le sous-système d'émission (S2) étant configuré à partir de paramètres déterminés dans le sous-système de réception (S1).

18. Système optique (S) selon la revendication 16 dans lequel le récepteur optique (OR) et l'émetteur optique (OE) sont couplés au dispositif de traitement

(D) ou au dispositif de multiplexage spatial (MX) par l'intermédiaire d'un circulateur optique (C).

**19.** Système optique (S) selon la revendication 16 dans lequel l'émetteur optique (OE) produit une pluralité de faisceaux d'émission (E) et est agencé pour contre propager une partie au moins de chaque faisceau d'émission (E) selon un sens opposé au sens principal de propagation (P) dans le dispositif de traitement (D).

**20.** Système optique (S) selon l'une des revendications 11 à 16 comprenant un dispositif séparateur selon la longueur d'onde ou selon la polarisation, tel qu'un miroir ou un filtre dichroïque.

**21.** Système optique (S') selon la revendication 5 comprenant une source lumineuse (LS), disposée en amont du démultiplexeur spatial (DX), et produisant le rayonnement lumineux multimode incident $(I_0)$.

**22.** Système optique (S') selon la revendication précédente comprenant un dispositif de mise en forme (BS) disposé en aval du deuxième dispositif actuateur de phase (1'), le dispositif de mise en forme (BS) recevant les faisceaux convertis (I') pour produire un faisceau lumineux mis en forme (J).

**23.** Système optique (S') selon l'une des deux revendications précédentes dans lequel les phases relatives et les amplitudes relatives de consigne (C) peuvent être choisies pour donner une forme prédéterminée au faisceau lumineux mis en forme (J).

**Patentansprüche**

**1.** Verarbeitungsvorrichtung (D) von mindestens zwei untereinander kohärenten Monomodus-Lichtstrahlen, sogenannte "Einfallstrahlen", wobei die Einfallstrahlen (I) Phasen und/oder Amplituden aufweisen, die variieren können, wobei die Verarbeitungsvorrichtung (D) mindestens folgende nacheinander durch Freiräume oder durch Wellenleiter gemäß einer Hauptausbreitungsrichtung (P) miteinander verbunde Elemente umfasst:

- einen ersten Phasenaktuatorkreis (1) zum Einstellen der relativen Phasen der Einfallstrahlen (I);
- eine Mehrebenen-Umwandlungsvorrichtung (2) zum Empfangen der Lichtstrahlen, die aus dem ersten Phasenaktuatorkreis (1) stammen, an einem ersten optischen Anschluss, die so eingerichtet ist, dass sie die Energie dieser Strahlen auf mindestens zwei Monomodus-Lichtstrahlen, sogenannte "umgewandelte Strahlen", verteilt, die an einem zweiten optischen Anschluss erzeugt werden;
- einen zweiten Phasenaktuatorkreis (1'), der nach der Mehrebenen-Umwandlungsvorrichtung (2) angeordnet ist, um die relativen Phasen der umgewandelten Strahlen (I') einzustellen.

**2.** Verarbeitungsvorrichtung (D) nach dem vorhergehenden Anspruch, wobei die an dem Ausgang des zweiten Phasenaktuators (1') umgewandelten Strahlen (I') relative Amplituden und relative Phasen aufweisen, die jeweils mit relativen Sollwertamplituden und relativen Sollwertphasen übereinstimmen.

**3.** Verarbeitungsvorrichtung (D) nach einem der beiden vorhergehenden Ansprüche, wobei die Mehrebenen-Umwandlungsvorrichtung (2) eine Vielzahl von mikrostrukturierten Bereichen umfasst, die auf mindestens einem optischen Element angeordnet sind, um die jeweiligen Phasen der Einfallstrahlen (I) während einer Vielzahl von Reflexionen oder Übertragungen, die durch eine freie Ausbreitung getrennt sind, abzufangen und räumlich zu verändern.

**4.** Verarbeitungsvorrichtung (D) nach einem der vorhergehenden Ansprüche, wobei die erste Phasenaktuatorvorrichtung (1) und die zweite Phasenaktuatorvorrichtung (1') eine Vielzahl von optischen Phasenverschiebern (A) umfassen, die mit den Einfallstrahlen (I) verbunden sind, und die Verarbeitungsvorrichtung (D) mindestens eine Steuervorrichtung (CDE) zum Ausarbeiten von Steuersignalen $(s_j)$ der optischen Phasenverschieber (A) umfasst.

**5.** Optisches System (S, S'), umfassend eine Verarbeitungsvorrichtung (D) nach einem der vorhergehenden Ansprüche und umfassend einen räumlichen Demultiplexer (DX), der vor der ersten Phasenaktuatorvorrichtung (1) angeordnet ist, wobei der räumliche Demultiplexer (DX) eine Einfall-Multimodus-Lichtstrahlung $(I_0)$ empfängt und die Einfallstrahlen (I) erzeugt.

**6.** Optisches System (S, S') nach dem vorhergehenden Anspruch, wobei der räumliche Demultiplexer (DX) durch eine Mehrebenen-Umwandlungsvorrichtung umgesetzt wird.

**7.** Optisches System (S, S') nach einem der beiden vorhergehenden Ansprüche, wobei die umgewandelten Strahlen (I') in einer Mosaik-Öffnungskonfiguration angeordnet sind, wobei die Nebeneinanderstellung der umgewandelten Strahlen (I') einen rekombinierten Monomodus-Lichtstrahl (I") erzeugt.

**8.** Optisches System (S, S') nach einem der Ansprüche 5 bis 6, umfassend eine räumliche Multiplexvorrichtung (MX; 2), die nach der zweiten Phasenaktuatorvorrichtung (1') angeordnet ist, wobei die räumliche Multiplexvorrichtung (MX; 2) die umgewandelten Strahlen (I') aufnimmt, um sie zu einem rekombinierten Monomodus-Lichtstrahl (I") zu rekombinieren.

9. Optisches System (S, S') nach dem vorhergehenden Anspruch, wobei die räumliche Multiplexvorrichtung (MX) durch eine Mehrebenen-Umwandlungvorrichtung umgesetzt wird.

10. Optisches System (S, S') nach einem der beiden vorhergehenden Ansprüche, umfassend ein reflektierendes optisches Teil (M), das direkt nach dem zweiten Phasenaktuatorkreis (1') angeordnet ist, um die umgewandelten Strahlen (I') durch den zweiten Phasenaktuatorkreis (1') und die Mehrebenen-Umwandlungsvorrichtung (2) zurückzuleiten und den rekombinierten Monomodus-Lichtstrahl (I") an dem ersten optischen Anschluss der Mehrebenen-Umwandlungsvorrichtung (2) bereitzustellen.

11. Optisches System (S, S') nach dem vorhergehenden Anspruch, umfassend eine Extraktionsvorrichtung (4) des rekombinierten Monomodus-Lichtstrahls (I"), wobei die Extraktionsvorrichtung zwischen dem ersten Phasenaktuatorkreis (1) und der Mehrebenen-Umwandlungsvorrichtung (2) angeordnet ist.

12. Optisches System (S, S') nach Anspruch 10, wobei der rekombinierte Monomodus-Lichtstrahl (I") nur auf Höhe eines reservierten Modus des ersten optischen Anschlusses der Mehrebenen-Umwandlungsvorrichtung (2) gebildet wird.

13. Optisches System (S) nach einem der Ansprüche 7 bis 12, wobei die Verarbeitungsvorrichtung mit einer Monomodus-Lichtfaser (SMF) gekoppelt ist, in die der rekombinierte Monomodus-Lichtstrahl (I") eingespeist wird.

14. Optisches System (S) nach dem vorhergehenden Anspruch, umfassend einen optischen Empfänger (OR) zum Empfangen des rekombinierten Monomodus-Lichtstrahls (I").

15. Optisches System (S) nach dem vorhergehenden Anspruch, wobei der optische Empfänger (OR) einen optischen Verstärker des rekombinierten Monomodus-Lichtstrahls (I"), einen spektralen Demultiplexer und/oder eine kohärente oder direkte Erfassungsvorrichtung umfasst.

16. Optisches System (S) nach einem der Ansprüche 13 bis 15, umfassend einen optischen Sender (OE) zum Erzeugen mindestens eines Monomodus-Sendelichtstrahls (E), sogenannten "Sendestrahlen", wobei das optische System (S) eine vorkompensierte Strahlung (EO) in einer Richtung aussendet, die der der Einfall-Multimodus-Strahlung (10) entgegengesetzt ist.

17. Optisches System (S) nach dem vorhergehenden Anspruch, umfassend ein Sende-Untersystem (S1), ein Empfangs-Untersystem (S2), wobei das Sende-Untersystem (S2) anhand von Parametern eingerichtet ist, die im Empfangs-Untersystem (S1) bestimmt sind.

18. Optisches System (S) nach Anspruch 16, wobei der optische Empfänger (OR) und der optische Sender (OE) über einen optischen Zirkulator (C) mit der Verarbeitungsvorrichtung (D) oder der räumlichen Multiplexvorrichtung (MX) gekoppelt sind.

19. Optisches System (S) nach Anspruch 16, wobei der optische Sender (OE) eine Vielzahl von Sendestrahlen (E) erzeugt und so angeordnet ist, dass er mindestens einen Teil jedes Sendestrahls (E) in einer Richtung, die der Hauptausbreitungsrichtung (P) entgegengesetzt ist, in der Verarbeitungsvorrichtung (D) ausbreitet.

20. Optisches System (S) nach einem der Ansprüche 11 bis 16, umfassend eine Trennvorrichtung je nach Wellenlänge oder Polarisation, wie einen Spiegel oder einen dichroitischen Filter.

21. Optisches System (S') nach Anspruch 5, umfassend eine Lichtquelle (LS), die vor dem räumlichen Demultiplexer (DX) angeordnet ist und die Einfall-Multimodus-Lichtstrahlung ($I_0$) erzeugt.

22. Optisches System (S') nach dem vorhergehenden Anspruch, umfassend eine Formgebungsvorrichtung (BS), die nach der zweiten Phasenaktuatorvorrichtung (1') angeordnet ist, wobei die Formgebungsvorrichtung (BS) die umgewandelten Strahlen (I') aufnimmt, um einen geformten Lichtstrahl (J) zu erzeugen.

23. Optisches System (S') nach einem der beiden vorhergehenden Ansprüche, wobei die relativen Phasen und die relativen Sollwertamplituden (C) ausgewählt werden können, um dem geformten Lichtstrahl (J) eine vorbestimmte Form zu geben.

## Claims

1. Device (D) for processing at least two single-mode light beams coherent with each other, referred to as "incident beams", the incident beams (I) having phases and/or amplitudes likely to vary, the processing device (D) comprising at least, successively connected to each other by free spaces or by waveguides according to a main direction of propagation (P):

- a first phase-actuator circuit (1) for adjusting the relative phases of the incident beams (I);
- a multiplane conversion device (2) for receiving, on a first optical port, the light beams originating from the first phase-actuator circuit (1) and configured to distribute the energy of these beams to at least two single-mode light beams, referred to as "converted beams", produced at a second optical port;
- a second phase-actuator circuit (1') disposed downstream of the multiplane conversion device (2) for adjusting the relative phases of the converted beams (I').

2. Processing device (D) according to the preceding claim, wherein the beams converted (I') at the output of the second phase actuator (1') have relative amplitudes and relative phases conforming respectively to set relative amplitudes and set relative phases.

3. Processing device (D) according to one of the two preceding claims, wherein the multiplane conversion device (2) comprises a plurality of microstructured zones disposed on at least one optical element for intercepting and spatially modifying the respective phases of the incident beams (I) during a plurality of reflections or transmissions separated by a free propagation.

4. Processing device (D) according to any one of the preceding claims, wherein the first phase actuator device (1) and the second phase actuator device (1') comprise a plurality of optical phase shifters (A) associated with the incident beams (I) and the processing device (D) comprises at least one control device (CDE) for producing signals ($s_j$) controlling the optical phase shifters (A).

5. Optical system (S, S') comprising a processing device (D) according to one of the preceding claims and comprising a spatial demultiplexer (DX) arranged upstream of the first phase-actuator device (1), the spatial demultiplexer (DX) receiving an incident multimode light radiation ($I_0$) and producing the incident beams (I).

6. Optical system (S, S') according to the preceding claim, wherein the spatial demultiplexer (DX) is implemented by a multiplane conversion device.

7. Optical system (S, S') according to one of the two preceding claims, the converted beams (I') being arranged in a mosaic aperture configuration, the juxtaposition of the converted beams (I') producing a single-mode recombined light beam (I").

8. Optical system (S, S') according to one of claims 5 to 6, comprising a spatial multiplexing device (MX; 2) disposed downstream of the second phase-actuator device (1'), the spatial multiplexing device (MX; 2) receiving the converted beams (I') to recombine them into a single-mode recombined light beam (I").

9. Optical system (S, S') according to the preceding claim, wherein the spatial multiplexing device (MX) is implemented by a multiplane conversion device.

10. Optical system (S, S') according to one of the two preceding claims, comprising a reflective optical part (M) disposed directly downstream of the second phase-actuator circuit (1')
to backpropagate the converted beams (I') through the second phase actuator circuit (1') and the multiplane conversion device (2) and provide the single-mode recombined light beam (I") at the first optical port of the multiplane conversion device (2).

11. Optical system (S, S') according to the preceding claim, comprising a device for extracting (4) the single-mode recombined light beam (I"), the extraction device being disposed between the first phase-actuator circuit (1) and the multiplane conversion device (2).

12. Optical system (S, S') according to claim 10, wherein the single-mode recombined light beam (I") is formed only at a reserved mode of the first optical port of the multiplane conversion device (2).

13. Optical system (S) according to any one of claims 7 to 12, wherein the processing device is coupled to a single-mode optical fibre (SMF) into which the single-mode recombined light beam (I") is injected.

14. Optical system (S) according to the preceding claim comprising an optical receiver (OR) for receiving the monomode recombined light beam (I").

15. Optical system (S) according to the preceding claim, wherein the optical receiver (OR) comprises an optical amplifier for the single-mode recombined light beam (I"), a spectral demultiplexer, and/or a coherent or direct detection device.

16. Optical system (S) according to one of claims 13 to 15, comprising an optical emitter (OE) for producing at least one single-mode emission light beam (E), referred to as "emission beams", the optical system (S) emitting a pre-compensated radiation (EO) according to a direction opposite to that of the incident multi-mode radiation (10).

17. Optical system (S) according to the preceding claim, comprising an emission subsystem (S1) and a reception subsystem (S2), the emission subsystem (S2) being configured from parameters determined in the reception subsystem (S1).

18. Optical system (S) according to claim 16, wherein the optical receiver (OR) and the optical emitter (OE) are coupled to the processing device (D) or to the spatial multiplexing device (MX) via an optical circulator (C).

19. Optical system (S) according to claim 16, wherein the optical emitter (OE) produces a plurality of emission beams (E) and is arranged to counter-propagate at least a portion of each emission beam (E) in a direction opposite to the main direction of propagation (P) in the processing device (D).

20. Optical system (S) according to one of claims 11 to 16, comprising a separator device according to the wavelength or according to the polarisation, such as a mirror or a dichroic filter.

21. Optical system (S') according to claim 5, comprising a light source (LS), arranged upstream of the spatial demultiplexer (DX), and producing the incident multi-mode light radiation ($I_0$).

22. Optical system (S') according to the preceding claim, comprising a shaping device (BS) disposed downstream of the second phase actuator device (1'), the shaping device (BS) receiving the converted beams (I') to produce a shaped light beam (J).

23. Optical system (S') according to one of the two preceding claims, wherein the relative phases and the relative set amplitudes (C) can be selected to give a predetermined shape to the shaped light beam (J).

Figure 1

Figure 2

Figure 3

Figure 4a

Figure 4b

Figure 4c

Figure 5a

Figure 5b

Figure 6a

Figure 6b

Figure 7

Figure 8

Figure 9a

Figure 9b

Figure 9c

Figure 9d

Figure 10

## RÉFÉRENCES CITÉES DANS LA DESCRIPTION

**Documents brevets cités dans la description**

- WO 2007100752 A
- US 20090220246 A
- WO 2020161126 A
- US 9250454 B
- US 2017010463 A

**Littérature non-brevet citée dans la description**

- **MORIZUR et al.** Programmable unitary spatial mode manipulation. *J. Opt. Soc. Am. A*, November 2010, vol. 27 (11)
- **N. FONTAINE et al.** Design of High Order Mode-Multiplexers using Multiplane Light Conversion. *ECOC*, 2017